# EUROPÄISCHE PATENTSCHRIFT

(11) **EP 1 527 699 B1**
(45) Veröffentlichungstag und Bekanntmachung des Hinweises auf die Patenterteilung: **28.02.2007**
(21) Anmeldenummer: 04025369.2
(22) Anmeldetag: 26.10.2004
(51) Int. Cl.: A23K 1/10, A23K 1/18, B65D 85/72, B65B 25/06

(54) **Im Schalen abgefülltes Heimtiernahrungsprodukt mit wenigstens zwei phasengetrennten Schichten**
Petfood product filled in trays and having at least two phase-separated layers
Produit alimentaire pour animaux domestiques, remplis en barquettes et ayant au moins deux couches à phases séparées

(30) Priorität: 03.11.2003 DE 10351569
(43) Veröffentlichungstag der Anmeldung: 04.05.2005
(73) Patentinhaber: Saturn Petfood GmbH, 28197 Bremen (DE)
(72) Erfinder: Elmerhaus, Heinz-Josef, 28870 Ottersberh (DE); Krunoslav, Saric Dr., 27283 Verden (DE)
(74) Vertreter: Tarvenkorn, Oliver

(56) Entgegenhaltungen:
- EP-A- 0 769 252
- WO-A-98/05218
- WO-A-98/05219
- WO-A-03/062060
- GB-A- 2 266 218
- PATENT ABSTRACTS OF JAPAN Bd. 2000, Nr. 23, 10. Februar 2001 (2001-02-10) -& JP 2001 163377 A (AJINOMOTO CO INC), 19. Juni 2001 (2001-06-19)

## Beschreibung

Die Erfindung betrifft ein in Schalen abgefülltes Heimtiernahrungsprodukt mit wenigstens zwei phasengetrennten Schichten.

Aus der EP 923 319 ist ein mehrschichtiges Heimtiernahrungsprodukt bekannt, das zwei Schichten enthält, die in Dosen abgefüllt sind. Die Basisschicht enthält feste Nahrungsmittelbrocken in einer Soße. Die in der Dose darüber liegende Schicht enthält ein festes Nahrungsmittel und ist so fest, dass sie nach dem Umwenden der Dose die dann oben liegende Basisschicht tragen kann.

Allerdings ist die Basisschicht in sich nicht fest, so dass nach dem Umstürzen zwar die Nahrungsmittelbrocken auf der dann unten liegenden, festen Schicht liegen bleiben, jedoch läuft die Soße seitlich an der festen Basisschicht herunter. Hierdurch ergibt sich für den Tierbesitzer ein optisch wenig attraktives Erscheinungsbild. Auch muss er dadurch, dass das Heimtiernahrungsprodukt auf einem entsprechend tiefen Teller dem Tier angeboten wird, Vorsorge treffen, dass die Soße nicht über den Tellerrand läuft. Ein Verkleckern der flüssigen Soße durch das Tier beim Fressen kann damit nicht verhindert werden. Wegen des Anteils flüssiger Soße weicht das bekannte Heimtiernahrungsprodukt von der Konsistenz natürlicher Beute ab.

Die EP 0769252 offenbart ein Heimtiernahrungsprodukt mit mindestens zwei unterschiedlichen festen homogenen Schichten.

Es stellt sich daher die Aufgabe, ein Heimtiernahrungsprodukt anzugeben, dass in seiner Konsistenz der Beutenahrung von Heimtieren wie Hunde und Katzen nachempfunden ist und das sich für den Tierbesitzer ansprechend präsentiert.

Diese Aufgabe wird gemäß der Erfindung durch ein in einer Schale abgefülltes Heimtiernahrungsprodukt mit wenigstens zwei phasengetrennten Schichten gelöst, wobei
- eine in der Schale unten eingefüllte Basisschicht aus einem festen Nahrungsmittel gebildet ist und geeignet ist, wenigstens eine obere Schicht zu tragen,
- die obere Schicht geeignet ist, bei Wenden des Heimtiernahrungsprodukts die Basisschicht zu tragen, und die obere Schicht aus einer Geleezubereitung besteht, in die feste, aus Fleischmasse rekonstruierte Fleischbrocken eingebettet sind, in welche ein Geliermittel eingemischt ist.

Unter Fleischbrocken werden hier Nahrungsmittelbrocken, auch Chunks genannt, verstanden, die aus einer Zubereitung mit Fleischanteilen zu einem Feststoff rekombiniert sind.

Der Vorteil des erfindungsgemäßen Heimtiernahrungsprodukts besteht insbesondere darin, dass die Fleischbrocken in ein Gelee eingebettet sind. Die Geleeschicht ist dabei so fest, dass sie die feste Pastete der Basisschicht tragen kann, wenn das Heimtiernahrungsprodukt zum Verzehr durch Umstürzen aus der Schale heraus genommen wird. Dadurch ergibt sich für den Tierbesitzer eine attraktive Erscheinungsform. Eine saubere Fütterung des Tiers ist erleichtert.

Außerdem befriedigt die Art der Schichtenanordnung und die Zusammensetzung der Schichten den Spiel- und Beutetrieb des Haustiers und entspricht auch in der Konsistenz eher einem Beutetier, da nämlich unter der festen, als Pastete ausgebildeten und beim Verzehr zuoberst liegenden Basisschicht mit den Fleischbrocken feste Nahrungsmittel brocken verborgen sind, die vom Tier entdeckt werden können und dem Bedürfnis nach fester, intensiv zu kauender Nahrung entgegen kommen. Die Geleeschicht ist dabei nur so fest ausgebildet, dass sie ihre tragende Funktion bei Herstellung, Transport, Lagerung und Zubereitung erfüllen kann. Zugleich ist sie aber noch so weich, dass sie vom Tier aufgeschleckt werden kann, was gerade Katzen lieben.

Erfindungswesentlich ist, dass die Geliermittel zum Binden des Wassers aus einer Flüssigphase als zweiter Komponente der Geleeschicht in die Fleischbrocken eingebettet sind, wohingegen üblicherweise die Flüssigphase auch das verfestigende Geliermittel enthält. Durch diese Umkehrung bei der Ausgelierung wird eine dauerhafte transparente obere Schicht erhalten. Selbst bei einer gewollten farblichen Anpassung durch Färben der Flüssigphase bleibt die obere Schicht transparent. Trübstoffe diffundieren erfindungsgemäß kaum sichtbar in das Gelee ein. Durch das transparente Gelee hindurch sind die Fleischbrocken erkennbar.

Weiterhin betrifft die Erfindung ein Verfahren zur Herstellung des mehrschichtigen Heimtiernahrungsprodukts.

Bei der Herstellung stellt sich neben der Erzielung kurzer Taktzeiten zur Erhöhung der Produktionskapazität die Aufgabe, einen an sich bekannten Abfüllprozess für das erfindungsgemäße Heimtiernahrungsprodukt so zu optimieren, dass an den Außenseiten des verzehrfertigen Produkts eine sichtbare Phasentrennung geschaffen wird und dass bei dem Gelee die gewünschte Festigkeit und Transparenz erreicht werden.

Diese Aufgabe wird durch ein Verfahren mit den Merkmalen des Anspruchs 7 gelöst.

Wesentlich hierbei ist, dass das Zuführen und Abfüllen der Fleischmasse der Basisschicht in die Schale im wesentlichen isotherm, also unter Aufrechterhaltung einer bestimmten Temperatur, erfolgt, und zwar mit einer Temperatur, bei der die eingestellte niedrige Viskosität der Fleischmasse solange erhalten bleibt, bis die für die Basisschicht vorgesehene Menge vollständig in die Schale eingefüllt ist. Dadurch kann sich die Fleischmasse aufgrund der Schwerkraft gleichmäßig in der Schale verteilen und eine ebene Oberfläche ausbilden.

Überraschenderweise hat sich gezeigt, dass die Verwendung von eckigen, insbesondere quadratischen oder hexagonalen Schalen zu besonders guten Ausbildungen der Geleeschicht mit einer gleichmäßigen Verteilung und einer sauberen Phasentrennung zwischen der Basisschicht und der oberen Schicht führt.

In einer vorteilhaften Variante des Verfahrens kann die Basisschicht nach dem Einfüllen in die Schale mit Eiswasser besprengt werden. Es kann aber alternativ oder zusätzlich eine entsprechend gekühlte erste Teilmenge der Flüssigphase eingefüllt. Durch die Wärmeabfuhr kann die Basisschicht hierdurch schneller erstarren und wird unmittelbar tragfähig für die nachfolgend aufzugebenden Komponenten.

Weitere vorteilhafte Ausgestaltungen des erfindungsgemäßen Verfahrens sind den weiteren Unteransprüchen zu entnehmen.

Die Erfindung wird nachfolgend mit Bezug auf die Zeichnung näher erläutert. Die Figuren zeigen im Einzelnen:
- Fig. 1: das erfindungsgemäße Heimtiernahrungsprodukt im Schnitt;
- Fig. 2: das umgestürzte Heimtiernahrungsprodukt in perspektivischer Ansicht;
- Fig. 3: eine Abfüllanlage in schematischer Ansicht und
- Fig. 4a - 4c: geeignete Schalenformen in perspektivischer Ansicht.

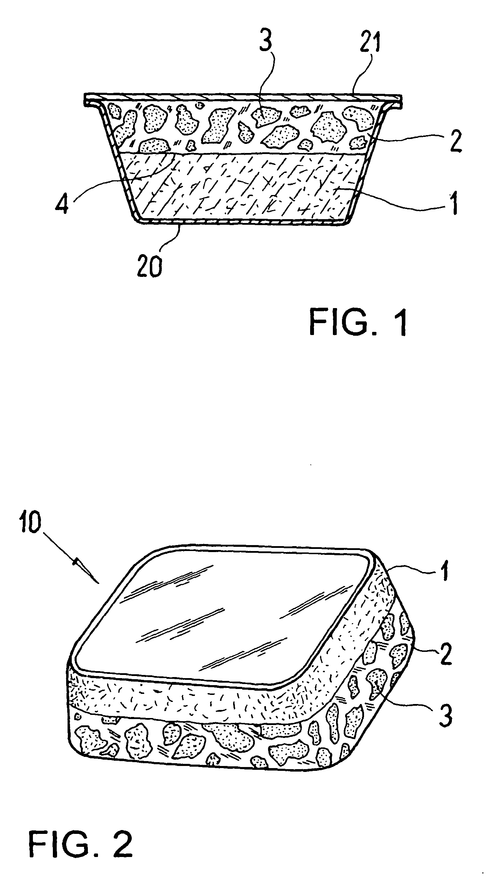

Figur 1 zeigt das erfindungsgemäße Heimtiernahrungsprodukt 10, das in einer Schale 20 mit aufgesiegeltem Deckel 21 verpackt ist in einer Schnittansicht. Unten in der Schale 20 ist eine Basisschicht 1 angeordnet, die als Pastete aus einer überwiegend homogenen, festen Fleischzubereitung gebildet ist. Das Verhältnis von Länge zu Höhe bzw. Breite zu Höhe ist vorzugsweise größer 1, das heißt, die Füllung in der Schale 5 ist insgesamt, wie auch jede der Schichten 1, 2 für sich, eher flach ausgebildet.

Auf der tragfähigen Basisschicht 1 liegt eine obere Schicht 2 aus einer Geleezubereitung mit darin eingebetteten Fleischbrocken 3 auf. Erfindungswesentlich ist, dass keine Durchmischung der Schichten 1, 2 erfolgt, und zwar weder bei der Herstellung noch beim Transport noch bei der Zubereitung zum Verzehr. Es ist vielmehr eine Trennebene 4 gebildet, an der die Schichten 1 und 2 zwar aneinander haften, ohne dass aber durch Schütteln etc. Bestandteile der einen Schicht über die Trennebene 4 hinaus in die jeweils andere Schicht geraten können.

Somit präsentiert sich dem Tierbesitzer nach dem Abnehmen des Deckels 21 und dem Umstürzen des Inhalts der Schale auf eine Unterlage ein attraktives Tiernahrungsmittel 10 mit zwei deutlich voneinander getrennten Schichten 1, 2, wie in Fig. 2 abgebildet.

Die in der Schale 20 gemäß Figur 1 noch oben liegende Schicht 2, die nach der Zubereitung gemäß Fig. 2 dann unten liegt, umfasst feste, rekonstruierte Fleischbrocken 3 in Gelee bzw. Aspik und ist in der Lage, die Grundschicht 1 aus einer Pastetenzubereitung zu tragen.

Des weiteren kann die obere Schicht 2 Gemüse, Reis, Nudeln und Kräuter enthalten. Der Aspik/Gelee ist vorzugsweise transparent, beispielsweise als Fleischfondgelee, dabei entweder ganz klar transparent oder eingefärbt transparent.

Möglich ist aber auch, durch Zugabe von z. B. Tomate, Sahne, Quark, Milch, Joghurt eine bestimmte Einfärbung vorzunehmen.

Das erfindungsgemäße Heimtiernahrungsprodukt setzt sich anteilsmäßig wie folgt zusammen:
- Fleischbrocken: 30 - 50 Gew.-%
- Gelee: 30 - 40 Gew.-%
- Pasteten-Basisschicht: 30 - 45% Gew.-%.

Das Verfahren zur Herstellung des erfindungsgemäßen mehrschichtigen Heimtiernahrungsprodukts wird nachfolgend erläutert:

Die Fleischmasse für die Basisschicht 1 wird zubereitet. Mögliche Rezepturbestandteile sind: Fleisch und tierische Nebenerzeugnisse in frischer und/oder gefrorener Form, Mineralstoffe, pflanzliche Nebenerzeugnisse, Fette, Zucker, Salz, Gewürze, Vitamine und/oder Wasser.

Es wird eine Geliermittelkombination auf Basis von Carrageenan, Xanthaan, Johannisbrotkernmehl und/oderCassia, und/oder Guar verwendet.

Fleisch und tierische Nebenerzeugnisse werden zu einer Fleischmasse zerkleinert und auf 56° bis 59 °C erhitzt, danach erfolgt die Zugabe der Trockensubstanzen einschließlich der Geliermittelkombination. Es erfolgt eine Vermischung von Fleisch, Trockensubstanzen und Geliermittelkombination während 5 bis 10 Minuten, wobei sich die Trockenstoffe und insbesondere die Geliermittelkombination auflösen.

Anschließend erfolgt eine Emulsionsbildung mit Zerkleinerung der Partikel in der Fleischmasse auf kleiner 2 mm unter Verwendung einer geeigneten Zerkleinerungsvorrichtung, beispielsweise einer sogenannten Urschel-Mühle, einer Stephanmühle oder eines Karl-Schnell-Durchlaufkutters mit Emulsionskopf.

Bevorzugt wird sogar eine Zerkleinerung auf kleiner 1 mm vorgenommen.

Die Fleischmasse wird unverzüglich in einen beheizbaren, vorzugsweise mit Rührwerk ausgestattetem Zwischenbehälter eingefüllt und auf 56° bis 59° C gehalten, um eine definierte Viskosität der Fleischmasse zu erhalten, die eine optimale Ausformung in der Schale gewährleistet. Zur Vermeidung von fehlerhaften Füllungen der Fleischmasse in die Schale ist es erfindungswesentlich, das gesamte Abfüllsystem vom temperierten Zwischenbehälter bis hin zu einem Füllkopf zu isolieren bzw. isoliert zu halten.

Die Fleischmasse enthält 70 bis 85 Gew.-% Feuchte.

Parallel mit der Fleischmasse werden die Fleischbrocken zubereitet. Diese werden aus vorzerkleinertem, gewolftem Fleisch und tierischen Nebenerzeugnisse in frischer oder gefrorener Form und/oder aus als Fleischmehl hergestellt, wobei Mineralstoffe, Vitamine, Salz, Zucker, Gewürze, Geliermittelkombination und/oder pflanzliche Nebenerzeugnisse zugesetzt werden. Erfindungswesentlich ist, dass die verwendete Geliermittelkombination auf Basis von Carrageen, Johannisbrotkernmehl und/oder Cassia und oder Guar, in einer Menge von 1,5 - 2,5 % in die Zubereitung für die Fleischbrocken eingemischt wird.

Die Einzelbestandteile mit den Geliermitteln werden bei einer Temperatur zwischen -4° bis +5 C vermischt. Es wird eine Feinstzerkleinerung mittels eines Karl-Schnell-Durchlaufkutters oder einer Stephanmühle vorgenommen. Die Brocken-Zubereitung wird mit regelbaren Pumpen in einen Zwischenpuffer verbracht.

Die Brocken-Zubereitung wird in einem Dampftunnel zu Strängen oder zu einem Teppich ausgebreitet.

Eine kontiniuierliche Zufuhr der Fleischmasse zum Dampftunnel zwecks Formen und Koagulation der Masse bei definierten Einstellungen unter Verwendung einer Heiz/Heizoder Heiz/Kühl-Kombination zur Erzielung bestimmter Konsistenzen bei den rekonstruierten Fleischstücken ist sicherzustellen.

Die Stränge bzw. der Teppich werden in Längs- und in Querrichtung geschnitten, wodurch Fleischbrocken unterschiedlicher Formen und Längen hergestellt werden.

Die Fleischbrocken haben einen Feuchtegehalt von ca. 55 bis 70 Gew.-%.

Zudem wird parallel zur Zubereitung der Fleischmasse für die Pasteten-Basisschicht und zur Herstellung der Fleischbrocken eine Flüssigphase vorbereitet. Diese enthält vorzugsweise Wasser, Mineralstoffe, Gewürze, Zucker, Vitamine, Xanthan und/oder Guar.

Xanthan und/oder Guar wird im erfindungsgemäßen Verfahren zugegeben, um ein Nachtropfen der Flüssigphase an der Abfüllstation und daraus resultierende Verschmutzungen des Siegelrands der Schale zu vermeiden.

Die genannten Einzelkomponenten werden mit Hilfe eines Umpumpemulgiersystems, wie beispielsweise von der Fa. Koruma hergestellt, oder mittels eines Ultra-Torrax (Fa. Ystral) vermischt.

Damit sind die Komponenten für die Basisschicht 1, die obere Schicht 2 und die Fleischbrocken 3 des erfindungsgemäßen Heimtiernahrungsprodukts 10 vorbereitet.

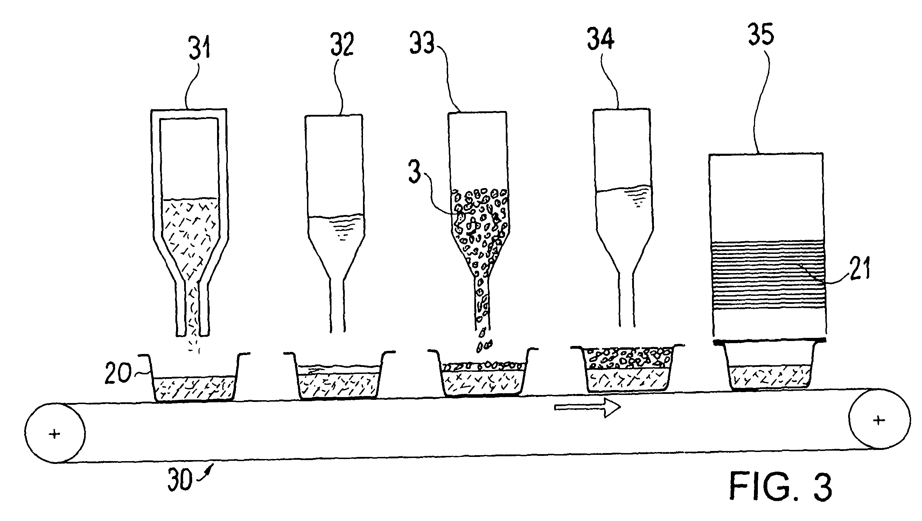

### Der Abfüllvorgang wird unter Bezug auf Fig. 3 erläutert:

Mit einer Fördervorrichtung 30 werden offene Schalen 20 herbeigeführt. Geeignet sind Schalen aus Aluminium, Stahl oder Kunststoff, als Einzel- oder Verbundmaterial und vorzugsweise mit einem Fassungsvermögen für ein Füllgewicht von 100g, 150g, 200g, 250g, 300g, 400g.

An einer ersten Abfüllstation 31 wird die temperierte Fleischmasse für die Basisschicht 1 in die Schale 20 gefüllt.

Durch die Isolierung der Zuführ- und Abfüllvorrichtungen gelangt die Fleischmasse mit einheitlicher Viskosität in die Schale 20, wo sie infolge der Schwerkraft verlaufen und sich somit gleichmäßig über den gesamten Schalenboden verteilen kann.

Durch die Umgebungstemperatur wird die Fleischmasse von eine Abfülltemperatur von 56° bis 59°C auf eine Kerntemperatur kleiner 51°C abgekühlt.

An einer zweiten Abfüllstation 32 wird Eiswasser und/oder eine erste Teilmenge der gekühlten Flüssigphase zugegeben. Die Basisschicht 1 kann damit schneller abkühlen und erstarren, wodurch sie schneller tragfähig wird.

Entscheidend für diese Geleebildung ist die erfindungsgemäße Gelierkombination auf Hydrokolloidbasis.

An einer dritten Abfüllstation 33 können dann Fleischbrocken 3 auf die Basisschicht 1 gegeben werden. Die Fleischbrocken 3 werden getragen, ohne in die Basisschicht 1 einzusinken.

An der folgenden vierten Abfüllstation 34 wird die Flüssigphase bzw. eine zweite Teilmenge derselben zugegeben, so dass die Fleischbrocken 3 vollständig bedeckt sind und das angestrebte Füllgewicht des Gesamtinhalts der Schale 20 erreicht wird.

An einer Siegelstation 35 wird ein Deckel 21 auf die Schale 20 gelegt und mit dieser versiegelt.

Die Durchlaufzeit von der Ankunft der leeren Schale 20 an der Abfüllstation 31 bis zum Aufsiegeln des Deckels 21 beträgt 15 bis 18s. Dadurch wird eine Nachgelierung der Fleischmasse sichergestellt, um das gewünschte Produktoutfit zu gewährleisten.

Die Stationen 31, 32, 33, 34 können mit mehreren parallelen Abfülldüsen bzw. -köpfen versehen sein, so dass mehrere Schalen nebeneinander gleichzeitig befüllt werden können.

Nach dem Verschließen erfolgt vorzugsweise eine Wendung der Schalen, damit ein glatter, geschlossener Produktspiegel aus klarem, transparenten Gelee mit sichtbaren, eingelegten, rekonstruierten Fleischstücken definierter Größe erreicht wird.

Die Abmessungen betragen vorzugsweise:
- Länge : 4-15 mm
- Breite: 6 - 20 mm,
- Höhe: 4 - 20 mm.

Letzter Schritt der Herstellung ist die Sterilisation des Heimtiernahrungsprodukts 10 in der Schale 20 durch Erhitzen. Diese dient erfindungsgemäß nicht nur der Abtötung von Keimen, sondern auch der Gelierung der oberen Schicht.

Während der Sterilisation tritt die Hydrokolloidkombination aus den rekonstruierten Fleischbrocken 3 in die Flüssigphase, und nach abgeschlossenem Sterilisationsvorgang bildet sich ein klares, festes Gelee. Die erfindungsgemäße Hydrokolloidkombination in den rekonstruierten Fleischstücken 3 sichert die Stabilität der Fleischmasse und ergibt eine definierte Brätviskosität vor der Koagulation im Dampftunnel.

Ein eventueller Einsatz von Cerealien in den rekonstruierten Fleischstücken würde zu einer Trübung des Gelees führen, wodurch das gewünschte Produktaussehen nicht mehr sichergestellt wäre.

Die Sterilisation erfolgt vorzugsweise in einem Autoklaven bei 123° - 129°C und bei einem entsprechendem Gegendruck von 3,0 - 4,2 bar. Die F₀-Werte betragen zwischen 10 und 120.

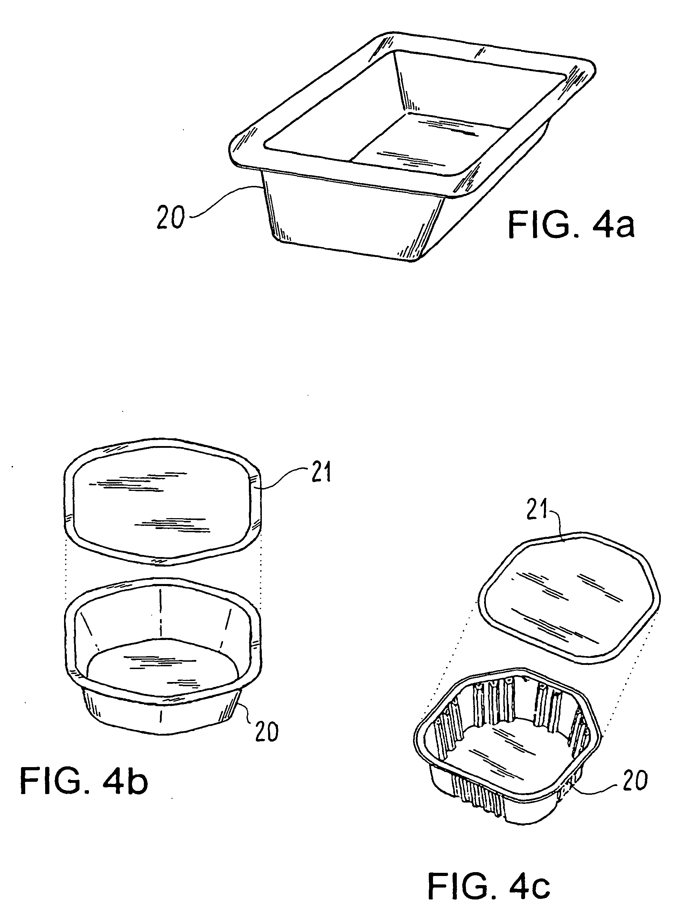

Die Fig. 4a bis 4c zeigen besonders geeignete Schalenformen für das erfindungsgemäße Verfahren. Neben dem quadratischen Grundtyp gemäß Fig. 4a sind auch symmetrische (vgl. Fig. 4b) und asymmetrische Polygone (vgl. Fig. 4c) geeignet.

## Patentansprüche

1. In einer Schale (5) abgefülltes Heimtiernahrungsprodukt (10) mit wenigstens zwei phasengetrennten Schichten (1, 2), wobei
- eine in der Schale (5) unten eingefüllte Basisschicht (1) aus einem festen Nahrungsmittel gebildet ist und geeignet ist, wenigstens eine obere Schicht (2) zu tragen;
- die obere Schicht (2) geeignet ist, bei Wenden des Heimtiernahrungsprodukts die Basisschicht (1) zu tragen, und die obere Schicht (2) aus einer Geleezubereitung besteht, in die feste, aus Fleischmasse rekonstruierte Fleischbrocken (3) eingebettet sind, in welche ein Geliermittel eingemischt ist.

2. Heimtiernahrungsprodukt (10) nach Anspruch 1, **dadurch gekennzeichnet, dass** das Geliermittel ein Hydrokolloid ist oder ein Hydrokolloid enthält.

3. Heimtiernahrungsprodukt (10) nach Anspruch 1 oder 2, **dadurch gekennzeichnet, dass** die Schichten (1, 2) quadratisch sind und eine Kantenlänge von 5 cm bis 15 cm haben.

4. Heimtiernahrungsprodukt (10) nach Anspruch 1 oder 2, **dadurch gekennzeichnet, dass** die Schichten (1, 2) und die Schale (20) einen mehreckigen Grundriss haben.

5. Heimtiernahrungsprodukt (10) nach Anspruch 4, **dadurch gekennzeichnet, dass** die Schichten (1, 2) hexagonal sind.

6. Heimtiernahrungsprodukt (10) nach einem der Ansprüche 1 bis 5, **dadurch gekennzeichnet, dass** die Schichten (1, 2) jeweils eine Höhe von 1 cm bis 3 cm haben.

7. Verfahren zur Herstellung eines mehrschichtigen Heimtiernahrungsprodukts (10) nach einem der Ansprüche 1 bis 6 mit wenigstens folgenden Verfahrensschritten:
a) Zerkleinerung von Fleisch und/oder tierischen Nebenprodukten zu einer Fleischmasse;
b) Erhitzen auf eine Zubereitungstemperatur;
c) Zugabe von Geliermittel und anderen Trockenstoffen und Vermischung mit der Fleischmasse;
d) Feinstzerkleinerung der Fleischmasse zu einer Fleischpartikelgröße von kleiner/gleich 2 mm;
e) Einlagern der Fleischmasse in einen beheizbaren Zwischenpuffer und Temperieren auf eine Abfülltemperatur;
f) Zuführen der Fleischmasse zu einer Abfüllvorrichtung (31) und Abfüllen in eine Schale (20) als Basisschicht (1) unter Aufrechterhaltung der Abfülltemperatur;
g) Auflegen von Fleischbrocken (3) auf die Basisschicht (1);
h) Bedecken der Fleischbrocken (3) mit einer zweiten Teilmenge der Flüssigphase;
i) Verschließen der Schale (20) und
j) Sterilisieren des Heimtiernahrungsprodukts (10) in der Schale (20) durch Erhitzen.

8. Verfahren nach Anspruch 7, **dadurch gekennzeichnet, dass** nach Schritt f) Eiswasser oder gekühlte Flüssigphase mit einer Temperatur von 1° bis 8° C auf die Basisschicht (1) gegeben wird.

9. Verfahren nach Anspruch 7 oder 8, **dadurch gekennzeichnet, dass** die Zubereitungstemperatur 56° bis 67°C, insbesondere 56° bis 59°C beträgt.

10. Verfahren nach einem der vorhergehenden Ansprüche, **dadurch gekennzeichnet, dass** die Abfülltemperatur 56° bis 59° C beträgt.

11. Verfahren nach einem der vorhergehenden Ansprüche, **dadurch gekennzeichnet, dass** die Verfahrensschritte f) bis j) in einem Zeittakt von 15 s bis 18 s, gemessen am Durchlauf von einer ersten Abfüllstation (31) bis zu einer Siegelstation (35), durchgeführt werden.

12. Verfahren nach einem der vorhergehenden Ansprüche, **dadurch gekennzeichnet, dass** die Schale (20) eckig ist.

13. Verfahren nach einem der vorhergehenden Ansprüche, **dadurch gekennzeichnet, dass** die Schale (20) nach dem Verschließen gewendet wird.

14. Verfahren nach einem der vorhergehenden Ansprüche, **dadurch gekennzeichnet, dass** die verschlossene Schale in einem Autoklaven bei einer Temperatur von 121° bis 129° C und einem Druck 3,0 bis 4,2 bar sterilisiert wird.

15. Verfahren nach einem der vorhergehenden Ansprüche, **dadurch gekennzeichnet, dass** die Flüssigphase Xanthan und/oder Guar enthält.

16. Verfahren nach einem der vorhergehenden Ansprüche, **dadurch gekennzeichnet, dass** die Feinstzerkleinerung der Fleischmasse auf eine Fleischpartikelgröße von kleiner/gleich 1 mm erfolgt.

17. Verfahren nach einem der vorhergehenden Ansprüche, **dadurch gekennzeichnet, dass** vor dem Zugeben der Fleischbrocken (3) eine erste Teilmenge der Flüssigphase auf die Basisschicht aufgegeben wird und beim Bedecken der Fleischbrocken eine zweite Teilmenge der Flüssigphase zugegeben wird.

## Claims

1. Pet food product (10) filled in a tray (5) and having at least two phase-separated layers (1, 2), whereby
- a base layer (1) filled below in the tray (5) is formed by a solid food and is suitable for carrying at least one upper layer (2),
- the upper layer (2) is suitable for carrying the base layer (1) if the pet food product is turned over, and the upper layer (2) consists of a jelly preparation, into which solid chunks of meat (3) reconstituted from meat mixture are embedded, into which a gelling agent is mixed.

2. Pet food product (10) according to claim 1, **characterised in that** the gelling agent is a hydrocolloid or contains a hydrocolloid.

3. Pet food product (10) according to claim 1 or 2, **characterised in that** the layers (1, 2) are square-shaped and have an edge length of 5 cm to 15 cm.

4. Pet food product (10) according to claim 1 or 2, **characterised in that** the layers (1, 2) and the tray (20) are polygon-shaped.

5. Pet food product (10) according to claim 4, **characterised in that** the layers (1, 2) are hexagonal.

6. Pet food product (10) according to one of the claims 1 to 5, **characterised in that** the layers (1, 2) each have a height of 1 cm to 3 cm.

7. Method for producing a multi-layer pet food product (10) according to one of the claims 1 to 6 with at least the following method steps:
a) cutting-up of meat and / or animal by-products to form a meat mixture;
b) heating to a preparation temperature;
c) addition of gelling agent and other dry substances and mixing with the meat mixture;
d) finely cutting-up of the meat mixture to a meat particle size of less than or equal to 2 mm;
e) placing of the meat mixture in a heatable intermediate buffer and heating to a filling temperature;
f) feeding of the meat mixture to a filling device (31) and filling into a tray (20) as a base layer (1) while maintaining the filling temperature;
g) laying of chunks of meat (3) on the base layer (1) ;
h) covering of the chunks of meat (3) with a second partial amount of the liquid phase;
i) closing of the tray (20); and
j) sterilisation of the pet food product (10) in the tray (20) through heating.

8. Method according to claim 7, **characterised in that** after step f) iced water or cooled liquid at a temperature of 1°C to 8°C is added to the base layer (1).

9. Method according to claim 7 or 8, **characterised in that** the preparation temperature is 56° to 67°C, particularly 56° to 59°C.

10. Method according to one of the preceding claims, **characterised in that** the filling temperature is 56° to 59°C.

11. Method according to one of the preceding claims, **characterised in that** the method steps f) to j) are carried out in a time cycle of 15 s to 18 s, measured as the passage from a first filling station (31) to a sealing station (35).

12. Method according to one of the preceding claims, **characterised in that** the tray (20) is angular.

13. Method according to one of the preceding claims, **characterised in that** the tray (20) is turned over after being closed.

14. Method according to one of the preceding claims, **characterised in that** the closed tray is sterilised in an autoclave at a temperature of 121° to 129°C and a pressure of 3.0 to 4.2 bar.

15. Method according to one of the preceding claims, **characterised in that** the liquid phase contains xanthan and / or guar.

16. Method according to one of the preceding claims, **characterised in that** the meat mixture is finely cut to a meat particle size of less than or equal to 1 mm.

17. Method according to one of the preceding claims, **characterised in that** before the addition of the chunks of meat (3) a first partial amount of the liquid phase is added to the base layer and when covering the chunks of meat a second partial amount of the liquid phase is added.

## Revendications

1. Produit alimentaire (10) pour animaux domestiques, emballé dans une barquette (5) et comprenant au moins deux couches (1, 2) formant des phases séparées, dans lequel
une couche de base (1) introduite comme couche inférieure dans la barquette (5) consiste en un produit alimentaire solide et peut porter au moins une couche supérieure (2),
la couche supérieure (2) peut porter la couche de base (1) après retournement du produit alimentaire pour animaux domestiques, et la couche supérieure (2) consiste en une préparation de gelée dans laquelle sont incorporés des morceaux de viande solides (3), qui sont reconstitués à partir d'une masse de viande et dans lesquels des gélifiants sont introduis par mélange.

2. Produit alimentaire (10) pour animaux domestiques selon la revendication 1, **caractérisé en ce que** le gélifiant est un hydrocolloïde ou contient un hydrocolloïde.

3. Produit alimentaire (10) pour animaux domestiques selon la revendication 1 ou 2, **caractérisé en ce que** les couches (1, 2) sont rectangulaires et que les longueurs de leurs arêtes sont comprises entre 5 cm et 15 cm.

4. Produit alimentaire (10) pour animaux domestiques selon la revendication 1 ou 2, **caractérisé en ce que** la superficie, dans le plan horizontal, des couches (1, 2) et de la barquette (20) est polygonale.

5. Produit alimentaire (10) pour animaux domestiques selon la revendication 4, **caractérisé en ce que** les couches (1, 2) sont hexagonales.

6. Produit alimentaire (10) pour animaux domestiques selon l'une quelconque des revendications précédentes, **caractérisé en ce que** la hauteur de chacune des couches (1, 2) est de 1 cm à 3 cm.

7. Procédé de fabrication d'un produit alimentaire (10) pour animaux domestiques selon l'une quelconque des revendications précédentes comprenant au moins les étapes consistant à:
a) broyer de la viande et/ou des dérivés animaux pour former une masse de viande;
b) chauffer à une température de préparation;
c) ajouter un gélifiant et d'autres matières sèches et les mélanger avec la masse de viande;
d) broyer très finement la masse de viande jusqu'à atteindre une dimension de particules inférieure ou égale à 2 mm;
e) stocker la masse de viande dans un tampon chauffant intermédiaire et atteindre une température de remplissage;
f) amener la masse de viande à un dispositif de remplissage (31) et l'introduire comme couche de base (1) dans une barquette (20) en maintenant la température de remplissage;
g) disposer des morceaux de viande (3) sur la couche de base (1);
h) recouvrir les morceaux de viande (3) au moyen d'une deuxième partie de la phase liquide;
i) fermer la barquette (20); et
j) stériliser par chauffage le produit alimentaire (10) pour animaux domestiques emballé dans la barquette (20).

8. Procédé selon la revendication 7, **caractérisé en ce que** de l'eau glacée ou de la phase liquide refroidie à 1° à 8°C est déposée, après l'étape f), sur la couche de base (1).

9. Procédé selon la revendication 7 ou 8, **caractérisé en ce que** la température de préparation est de 56° à 67°C, en particulier de 56° à 59°C.

10. Procédé selon l'une quelconque des revendications précédentes, **caractérisé en ce que** la température de remplissage est de 56° à 59°C.

11. Procédé selon l'une quelconque des revendications précédentes, **caractérisé en ce que** la durée du cycle d'exécution des étapes f) à j) du procédé est de 15 secondes à 18 secondes, mesurée sur le parcours commençant à une première station de remplissage (31) et finissant à une station de scellement (35).

12. Procédé selon l'une quelconque des revendications précédentes, **caractérisé en ce que** la barquette (20) est polygonale.

13. Procédé selon l'une quelconque des revendications précédentes, **caractérisé en ce que** la barquette (20) est retournée après fermeture.

14. Procédé selon l'une quelconque des revendications précédentes, **caractérisé en ce que** la barquette fermée est stérilisée dans un autoclave à une température de 121° à 129°C, sous une pression de 3,0 à 4,2 bar.

15. Procédé selon l'une quelconque des revendications précédentes, **caractérisé en ce que** la phase liquide contient du xanthane ou de la gomme de guar.

16. Procédé selon l'une quelconque des revendications précédentes, **caractérisé en ce que** la dimension de particules de la masse de viande est inférieure ou égale à 1 mm après le broyage très fin.

17. Procédé selon l'une quelconque des revendications précédentes, **caractérisé en ce qu'**une première partie de la phase liquide est disposée sur la couche de base avant le dépôt des morceaux de viande (3) et qu'une deuxième partie de la phase liquide est ajoutée en recouvrant les morceaux de viande.
